# EUROPEAN PATENT SPECIFICATION

(11) **EP 2 518 290 B1**
(45) Date of publication and mention of the grant of the patent: **01.04.2015**
(21) Application number: 12002896.4
(22) Date of filing: 25.04.2012
(51) Int. Cl.: F01N 13/18, E02F 9/08, F01N 3/00, B60K 13/04

(54) **Exhaust gas aftertreatment support assembly**
Trägeranordnung für Abgasnachbehandlungssystem
Ensemble de support des systèmes de post-traitement des gaz d'échappement

(30) Priority: 28.04.2011 US 201113095982
(43) Date of publication of application: 31.10.2012
(73) Proprietor: Caterpillar Inc., Peoria, IL 61629-9510 (US)
(72) Inventor: Maske, Roy L., Peoria Illinois 61629-9510 (US); Muir, Jason W., Peoria Illinois 61629-9510 (US)
(74) Representative: Wagner & Geyer

(56) References cited:
- EP-A2- 2 345 802
- WO-A1-2010/110242
- FR-A1- 2 898 637
- US-A1- 2011 023 472

## Description

### Technical Field

This disclosure relates generally to an assembly for supporting internal combustion exhaust aftertreatment systems, and more particularly to an assembly for supporting diesel engine aftertreatment components adapted to remove particulates and other noxious emissions from exhaust gases prior to atmospheric release.

### Background

Aftertreatment systems for engine exhaust gases are utilized in many types of combustion engine driven machines, including, by way of example, track-type tractors. Such systems are designed and installed on such machines in an effort to assure compliance with local atmospheric emissions laws and regulations. The systems often include particulate filters and catalytic converters, among other components, intended to rid gaseous exhausts of certain matter considered deleterious to the condition of the environment prior to release to atmosphere. Exhaust gases, and particularly those from diesel engines, include soot, nitrogen oxides, and other noxious emissions that may be treated and/or removed by various media provided in special canisters prior to atmospheric release through exhaust stacks.

In the described engine driven machines, aftertreatment systems have been mounted to and supported by various devices associated with or affixed to engines, such as hydraulic pumps attached to the rear of diesel engines. In other cases, aftertreatment systems have been directly attached to the cylinder heads of engines. For example, US 20110005853 A1 and KR 845484 B1 disclose specific arrangements of how aftertreatment mounting structures have been disposed in relation to machine and engine components.

FR 2898637 A1 discloses an after-treatment support assembly comprising a mounting plate and a plurality of mounts connected to said mounting plate, wherein each of said mounts is configured to connect to a bracket, wherein said bracket is adapted to be connected to an engine block.

US 2011/023472 A1, WO 2010/110242 A1 and EP 2 345 802 A2 disclose alternative after-treatment support assembly adapted to be connected to an engine block or machine block, the after-treatment support assembly including a mounting plate and a plurality of mounts connected to said mounting plate, wherein each of said mounts is configured to connect to a bracket and further discloses first and second pairs of mounts.

Several issues have been associated with conventional support structures adapted to carry the weight of aftertreatment systems. In the case of aftertreatment systems attached to peripheral devices, such as pumps and/or other structures, it has often been necessary to expand or extend machine housings to accommodate such aftertreatment structures. On the other hand, in cases of aftertreatment systems directly attached to cylinder heads, the weight of the attached structures has created issues of cylinder head cracking, and has otherwise been associated with leaks of cylinder head gaskets. Other potential engine component issues can result from such gasket leaks.

The problems presented above may be overcome by the subject matter of claim 1. Preferred embodiments of the invention are claimed in the dependent claims.

In one disclosed embodiment, an aftertreatment system may be mounted on a support assembly positioned directly above a diesel engine. The support assembly may include a mounting plate configured to receive and support aftertreatment system components. A plurality of mounting structures, also called mounts, may be connected to the mounting plate, and each of the mounts may be directly connected to either the engine block or to an associated engine flywheel housing by means of a bracket directly affixed to either one of the block or housing structures.

In accordance with another aspect of the disclosure, the aftertreatment support assembly may have a plurality of brackets, with at least one bracket connected to the engine flywheel housing, and with at least another bracket connected separately to the front face of the engine block. In the latter case, a front header of the mounting plate may contain two mounts, and both may be carried by a singular third bracket.

In accordance with a further aspect of the disclosure, the aftertreatment mounting plate may have a substantially rectangular configuration defined by a pair of substantially parallel side rails and a pair of substantially parallel headers connected to and orthogonally arranged with respect to the side rails.

In accordance with a still further aspect of the disclosure, each of the mounting structures may comprise an isolation mount including an elastomeric vibration absorbing bushing.

### Brief Description of the Drawings

Figure 1 is a perspective view depicting front and right sides of a diesel engine that includes an aftertreatment system and associated support assembly constructed in accordance with the teachings of this disclosure;
Figure 2 is the same perspective as presented in Figure 1, but with the aftertreatment system removed to reveal the structure of an underlying support assembly; and
Figure 3 is a perspective view depicting different, i.e. left and rear, sides of the same diesel engine, again with the aftertreatment system removed to reveal the support assembly structure.
Figure 4 is a perspective view of left and rear sides of an alternative embodiment of the disclosed aftertreatment support assembly.

### Detailed Description

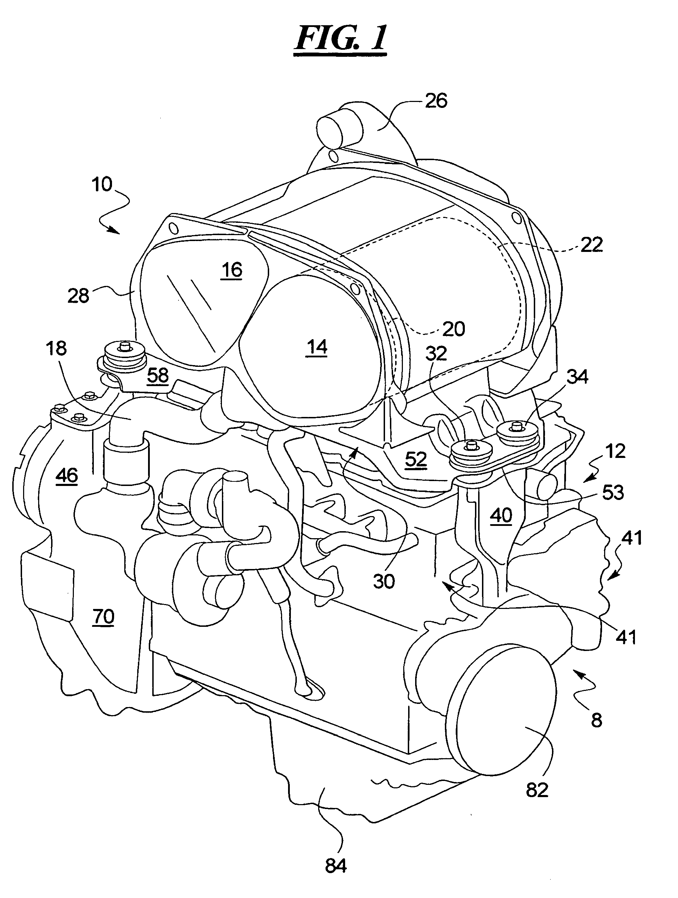

Referring to the drawings, with specific reference to Figure 1, a diesel engine 8 of a type that may be incorporated in track-type tractors, road graders, and other off-road machines, contains an exhaust aftertreatment system 10 mounted above, and secured directly to, the engine 8. Although shown and described herein only in a movable machine, the engine 8 could be utilized in any application suitable for use of a diesel engine, including stationary applications in industrial settings, for example. The engine 8 incorporates a housing, generally made from cast iron, that is commonly referred to as an engine block 12. Although described here as cast iron, one of ordinary skill in the relevant art would understand that the engine block 12 may be made from various other suitable materials, such as varying grades of steel, aluminum, and grey and ductile iron. Engine blocks 12 made of iron may possess damping properties that provide advantageous noise suppression characteristics during engine 8 operation. Although the engine 8 contains numerous internal parts including, inter alia, crankshaft, pistons, piston rings, valves, and seals, it will be appreciated that attached to the external engine block 12 may be a variety of external parts, some of which are briefly described below.

The aftertreatment system 10 may contain a particulate filter canister 14 adapted to remove soot from the exhaust gases of the diesel engine 8, along with a catalytic converter canister 16 adapted to remove remaining combustion products, including nitrogen oxides, carbon monoxide, and various unburned hydrocarbons, as commonly contained in untreated exhaust gases produced by such engines. In one embodiment, the particulate filter canister may include a diesel particulate filter "DPF" (not shown), a diesel oxidation catalyst "DOC" (not shown), an active regeneration system (not shown) for the DPF, and various other components as would be apparent to one of ordinary skill in the art. In one embodiment, the catalytic converter canister may include a selective catalytic reduction "SCR" system (not shown) and an ammonia oxidation catalyst "AMOX" (not shown). A mixing tube (not shown) connects the particulate filter canister 14 and the catalytic converter canister 16 and may allow for the injection of diesel exhaust fluid "DEF" therein. Although depicted herein as cylindrical, the canisters 14 and 16 may be formed in and of a variety of shapes not shown.

An exhaust gas manifold pipe or conduit 18 is coupled to a first end 20 (shown in phantom) of the particulate filter canister 14. Upon initial exit from the engine 8, the exhaust gases are untreated, and thus unlikely to meet regulated exhaust emission levels. The aftertreatment system is adapted to treat exhaust gases for release to atmosphere by removing combustion products considered harmful to the environment, in compliance with local laws and regulations. Upon traveling through the canister 14, diesel soot is first removed from the exhaust gases. Upon exit from a second end 22 (shown in phantom) of the canister 14, the exhaust gases travel through a conduit (not shown) for subsequent entry into the catalytic converter canister 16 in which the gases are further treated for removal of nitrogen oxides and other noxious substances prior to exiting to the atmosphere through an exhaust stack 26.

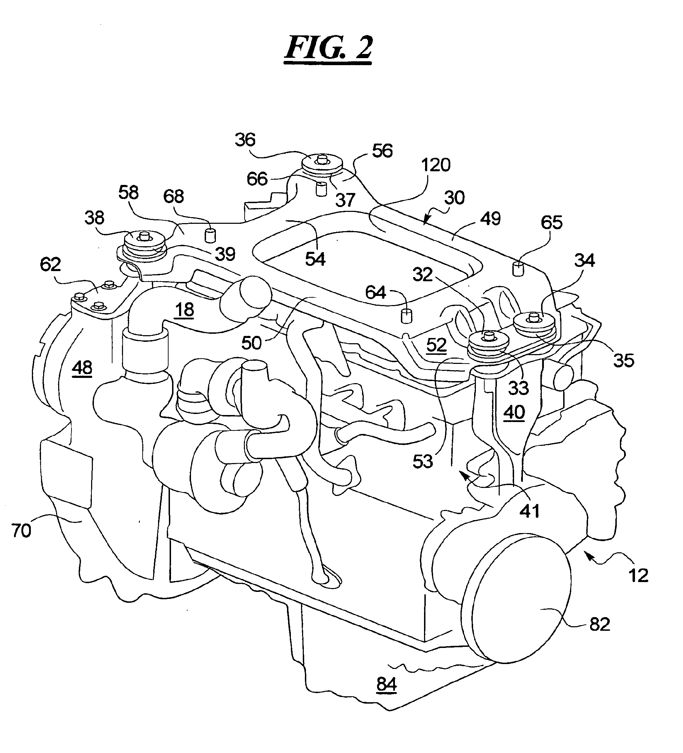

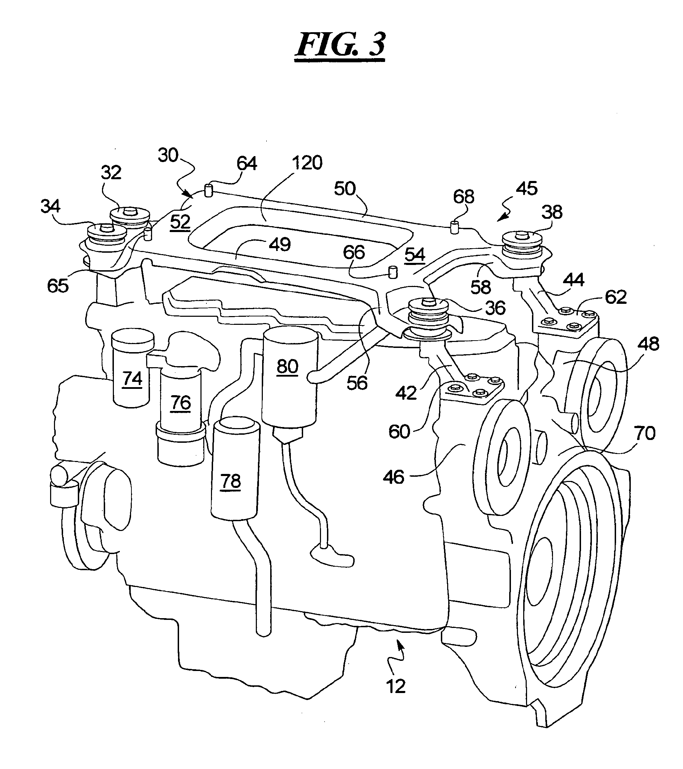

In the described embodiment, a canister end cover plate 28 is secured over the ends of the canisters 14 and 16 as shown. It may be appreciated that the entire aftertreatment system 10 may be mounted over the engine 8 by means of a mounting plate 30, as best viewed in Figures 2 and 3.

Referring now specifically to Figure 2, the mounting plate 30 may include front isolation mounts 32 and 34, shown in close proximity to one another in this first disclosed embodiment. The mounts 32 and 34 may each respectively include elastomeric vibration absorbing bushings 33 and 35. The mounting plate 30 may include rear isolation mounts 36 and 38, each also having respective elastomeric vibration absorbing bushings 37 and 39, as shown. The bushings, 33, 35, 37, and 39 may act to protect against damage resulting from shock loads and/or from long-term vibrations that might otherwise lead to cracks within either the mounting plate 30 or other structures, including associated mounting brackets to be described. Although constituting a part of the disclosure contained herein, the inclusion of elastomeric vibration absorbing bushings may not always be expedient. For example, in certain applications not involving significant vibratory issues, "hard" mounts may be employed in lieu of the "soft" elastomeric isolation mounts described. Where soft mounts are not needed, the use of hard mounts can save costs, and can provide other potential benefits including lower maintenance and/or servicing requirements.

Continuing reference to Figure 2, a front bracket 40 may be secured to a front face 41 of the engine block 12 as shown. The upper end of the bracket 40 may be secured to the front isolation mounts 32 and 34 and, as such, the single bracket 40 may accommodate each of the front pair of engine mounts, 32 and 34. In the disclosed embodiment, the front bracket 40 may be affixed to the engine block 12 without interference with a rotating viscous balance wheel 82 situated at the front of the diesel engine 8 above an oil pan 84.

Referring now to Figures 2 and 3, the upper ends of the rear brackets 42 and 44 may be secured to the rear isolation mounts 36 and 38, respectively. In the disclosed embodiment, the combination of the mounting plate 30, the isolation mounts 32, 34, 36, and 38 and their respective associated bushings 33, 35, 37, and 39, along with front and rear brackets 40, 42, and 44 may collectively comprise an aftertreatment support assembly 45 (Figure 3).

Continuing reference to Figure 3, the rear brackets 42 and 44 of the disclosed embodiment may be secured respectively to engine flywheel housing bosses 46 and 48. The bosses may be a part of a pair of annular gear pump adapters as depicted, or can be part of some alternative structure of the flywheel housing 70. For purposes of this disclosure, the flywheel housing 70 is considered to be an integral part of the engine 8, to the extent that it contains an engine flywheel (not shown). Alternative embodiments include configurations wherein the rear brackets 42 and 44 may be secured directly to the engine block 12, as well as other configurations wherein all of the brackets might be formed as part of the actual engine block 12. In any event, each of such described embodiments may be hereby deemed to fall within the scope and spirit of this disclosure

Referring again to both Figures 2 and 3, the mounting plate 30 may be comprised of a left side rail 49 and a right side rail 50, and the rails may be parallel or substantially parallel to one another. The rails may be respectively secured to front and rear headers 52 and 54, which may also be parallel and integrally joined to the rails 49 and 50. The mounting plate 30 as disclosed may be made as a unitary stamped metal part. Alternatively, the structure may be made using a variety of alternative means, including casting or forging. Also as disclosed, the front and rear brackets 40, 42, and 44 are cast parts, although they could alternatively be made by forging or other means.

Continuing reference to both Figures 2 and 3, the rear header 54 of the mounting plate 30 may contain ear portions 56 and 58 to support and otherwise accommodate the respective rear isolation mounts 36 and 38 as shown. Correspondingly, the front header 52 may include a forwardly extending flange 53 (Figure 2) to support and otherwise accommodate the pair of front isolation mounts 32 and 34.

The front and rear headers 52 and 54 of the described embodiment may also contain upstanding studs, such as shown at 64 and 65 in the front header 52, and at 66 and 68 in the rear header 54. The studs may accommodate connective devices (not shown) for securing the aftertreatment system 10 to the mounting plate 30. Additional studs (not shown) may be included in the rails 49 and 50 in lieu of, or in addition to, the studs 64, 65, 66, and 68 in the headers 52, 54.

Referring now specifically to Figure 3, the rear brackets 42 and 44 may be attached to engine flywheel housing bosses 46 and 48 as noted above. For this purpose, the brackets may include base pads 60 and 62, respectively, through which bolts as shown may be installed to affix the brackets 42, 44 to respective bosses 46, 48.

Placed above the engine 8 as depicted, the aftertreatment support assembly 45 can be adapted to effectively avoid interference with other components which may be attached to the sides of the engine block 12, such as fuel filters 74 and 76, an oil filter 78, and a crankcase breather filter 80. In addition, actual height of the mounting plate 30 can be controlled via changing lengths of respective brackets 40, 42, and 44. Ideally, the mounting plate 30 may be positioned sufficiently above the engine to permit servicing of fuel injectors and/or valve cover removal, etc., without requiring removal of the aftertreatment system 10 or any of its components 14 and 16.

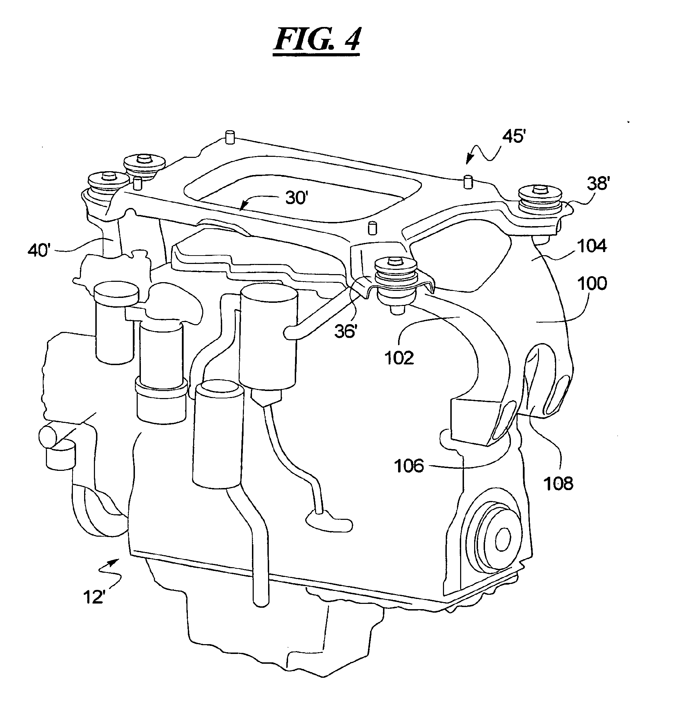

Referring now to Figure 4, an alternate embodiment of an aftertreatment support assembly 45' is shown. The mounting plate 30' and front bracket 40' are identical to the mounting plate 30 and the front bracket 40 of the first described embodiment.

In the alternate embodiment, however, the two rear brackets 42 and 44 (Figure 3) of the first described embodiment may be replaced by a unitary X-wing styled rear bracket 100 (Figure 4). Upper legs 102 and 104 of the bracket 100 may be adapted as shown to connect respectively to the rear mounts 36' and 38' of the mounting plate 30'. Lower legs 106 and 108 of the bracket 100 may be adapted for direct securement to the engine block 12' by way of apertures adapted for bolted connection as depicted.

Finally, although the bracket 100 may have an X-winged shape as depicted, it should be appreciated that both the bracket and mounting plate structures may comprise other shapes not shown or described herein, but which may fall within the spirit and scope of this disclosure.

### Industrial Applicability

The aftertreatment support assembly of the present disclosure may be advantageously utilized in a combustion engine driven work machine, such as a track-type tractor, road grader, truck, pipe layer, roller, forestry machine, stationary power, marine applications, or other type of industrial machine useful in construction, mining, or agriculture. The aftertreatment support assembly as disclosed may be useful to successfully provide long term securement of an aftertreatment system above a diesel engine without issues of structural cracking and/or cylinder head gasket leaks.

A mounting plate opening is situated medially within the mounting plate 30, i.e. between rails 49 and 50. The mounting plate opening, defined by an interior rim 120 (Figures 2 and 3), enhances "breathability" of the aftertreatment system 10 (Figure 1) by promoting greater airflow between the engine 8 and system 10 for cooling. The opening also serves to minimize fire hazards via prevention of debris collection immediately below aftertreatment components 14 and 16, and facilitates access for maintenance and serviceability. The opening reduces amount of required materials for construction of the mounting plate 30, including the steel required for its manufacture, thus resulting in cost savings. In summary, the mounting plate opening promotes benefits of heat dissipation, fire avoidance, serviceability, and cost savings.

A method of making the disclosed aftertreatment support assembly may involve the steps of:
a) forming a mounting plate having a pair of substantially parallel rails and a pair of substantially parallel front and rear headers, with the headers orthogonally positioned with respect to the rails, and with each of the headers being integrally joined to the rails;
b) forming a pair of isolation mounts in each of the headers;
c) installing elastomeric vibration absorbing bushings in each of the mounts;
d) forming a pair of rear brackets having first and second ends, and securing the first end of each of the rear brackets to one of the isolation mounts in the rear header; and
e) forming a single front bracket having first and second ends, and securing the first end of the front bracket to the pair of isolation mounts in said front header.

Additional method steps, by way of example, may include f) forming both mounting plate and the brackets by stamping, g) providing ear portions on the rear header, h) providing a front header flange on the front header for containing the front mounts, and i) providing base pads at the second ends of the rear brackets for accommodating their securement to an engine flywheel housing.

## Claims

1. An aftertreatment support assembly (45), comprising:
a mounting plate (30) configured to receive and support an aftertreatment system (10) thereon;
first and second pairs of mounts (32, 34, 36, 38) connected to said mounting plate (30), each of said first pair of said mounts (32, 34) being secured to a first bracket (40), one of said second pair of said mounts (36, 38) being secured to a second bracket (42), and the other of said second pair of said mounts (36, 38) being secured to a third bracket (44);
each bracket supporting at least one of said mounts (32, 36), each bracket also being configured for connection to said mounting plate (30); and
said brackets (40, 42, 44) being configured and adapted to be a) spaced from an engine cylinder head (8), and b) connected to an engine block (12).

2. The aftertreatment support assembly (45) of claim 1, further comprising said mounting plate (30) being disposed for placement above an engine block (12).

3. The aftertreatment support assembly (45) of claim 1, further comprising each of said brackets (40, 42, 44) being adapted for securement to an engine block (12).

4. The aftertreatment support assembly (45) of claim 1, said mounting plate (30) further comprising a substantially rectangular configuration including a pair of substantially parallel side rails (49, 50) and a pair of substantially parallel headers (52, 54), one of said headers comprising a front header (52), one of said headers comprising a rear header (54), and respective ends of said rails (49, 50) being joined to corresponding ends of said front and rear headers (52, 54).

5. The aftertreatment support assembly (45) of claim 4,
wherein each mount (32, 34, 36, 38) is an isolation mount comprising an elastomeric vibration absorbing bushing, each of said isolation mounts being positioned on one of said headers (52, 54).

6. The aftertreatment support assembly (45) of claim 4, one of said, headers (52, 54) including a pair of ear portions (56, 58), each ear portion being situated at opposed ends of said header (52, 54).

7. The aftertreatment support assembly (45) of claim 6, said ear portions (56, 58) being positioned on said rear header (54), and said one of each of said second pair of mounts (36, 38) being secured to one ear portion (56, 58) of said mounting plate (30).

8. The aftertreatment support assembly (45) of claim 1, said mounting plate (30) being adapted for placement above an engine block (12).

9. The aftertreatment support assembly (45) of claim 1,
wherein each bracket (40, 42, 44) supports at least one of said mounts (34, 36), each bracket having an end adapted and configured for connection to said mounting plate (30).

10. The aftertreatment support assembly (45) of claim 4, said first and second pairs of said mounts (34, 36) respectively being positioned on said rear and front headers (52, 54), each of said first pair of said mounts (34) being secured to a separate rear bracket (42, 44) connected to said rear header (54), and each of said second pair of said mounts (36) being secured to a common front bracket (40) connected to said front header (52).

11. The aftertreatment support assembly (45) of claim 10, each of said rear brackets (42, 44) defining a pad portion (60, 62) adapted to be secured to an engine flywheel housing (70).

12. The aftertreatment support assembly (45) of claim 10, said front bracket (40) being adapted for securement to a front face (41) of an engine block (12).

## Patentansprüche

1. Nachbehandlungstraganordnung (45), die folgendes aufweist:
eine Befestigungsplatte (30), die konfiguriert ist, um darauf ein Nachbehandlungssystem (10) aufzunehmen und zu tragen;
erste und zweite Paare von Befestigungselementen (32, 34, 36, 38), die mit der Befestigungsplatte (30) verbunden sind, wobei jedes des ersten Paares von Befestigungselementen (32, 34) an einem ersten Träger (40) befestigt ist, wobei eines des zweiten Paares von
Befestigungselementen (36, 38) an einem zweiten Träger (42) befestigt ist, und wobei das andere des zweiten Paares der Befestigungselemente (36, 38) an einem dritten Träger (44) befestigt ist;
wobei jeder Träger zumindest eines der Befestigungselemente (32, 36) trägt, wobei jeder Träger auch zur Verbindung mit der Befestigungsplatte (30) konfiguriert ist; und
wobei die Träger (40, 42, 44) so konfiguriert und eingerichtet sind, dass sie a) von einem Motorzylinderkopf (8) beabstandet sind, und b) mit einem Motorblock (12) verbunden sind.

2. Nachbehandlungstraganordnung (45) nach Anspruch 1, die weiter aufweist, dass die Befestigungsplatte (30) zur Anordnung über einen Motorblock (12) angeordnet ist.

3. Nachbehandlungstraganordnung (45) nach Anspruch 1, die weiter aufweist, dass jeder der Träger (40, 42, 44) zur Befestigung an einem Motorblock (12) eingerichtet ist.

4. Nachbehandlungstraganordnung (45) nach Anspruch 1, wobei die Befestigungsplatte (30) weiter eine im Wesentlichen rechteckige Konfiguration mit einem Paar von im Wesentlichen parallelen Seitenschienen (49, 50) und einem Paar von im Wesentlichen parallelen Kopfteilen (52, 54) aufweist, wobei einer der Kopfteile einen vorderen Kopfteil (52) aufweist, wobei einer der Kopfteile einen hinteren Kopfteil (54) aufweist, und wobei die jeweiligen Enden der Schienen (49, 50) mit entsprechenden Enden der vorderen und hinteren Kopfteile (52, 54) verbunden sind.

5. Nachbehandlungstraganordnung (45) nach Anspruch 4, wobei jedes Befestigungselement (32, 34, 36, 38) ein Isolierbefestigungselement ist, welches eine schwingungsabsorbierende Elastomerhülse aufweist, wobei jedes der Isolierbefestigungselemente an einem der Kopfteile (52, 54) positioniert ist.

6. Nachbehandlungstraganordnung (45) nach Anspruch 4, wobei einer der Kopfteile (52, 54) ein Paar von Ansatzteilen (56, 58) aufweist, wobei jeder Ansatzteil an gegenüberliegenden Enden des Kopfteils (52, 54) gelegen ist.

7. Nachbehandlungstraganordnung (45) nach Anspruch 6, wobei die Ansatzteile (56, 58) an dem hinteren Kopfteil (54) positioniert sind, und wobei eines von jedem des zweiten Paares von Befestigungselementen (36, 38) an einem Ansatzteil (56, 58) der Befestigungsplatte (30) befestigt ist.

8. Nachbehandlungstraganordnung (45) nach Anspruch 1, wobei die Befestigungsplatte (30) zur Anordnung über einem Motorblock (12) eingerichtet ist.

9. Nachbehandlungstraganordnung (45) nach Anspruch 1, wobei jeder Träger (40, 42, 44) zumindest eines der Befestigungselemente (34, 36) trägt, wobei jeder Träger ein Ende hat, welches zur Verbindung mit der Befestigungsplatte (30) eingerichtet und konfiguriert ist.

10. Nachbehandlungstraganordnung (45) nach Anspruch 4, wobei die ersten und zweiten Paare von Befestigungselementen (34, 36) jeweils an den hinteren und vorderen Kopfteilen (52, 54) positioniert sind, wobei jedes des ersten Paares von Befestigungselementen (34) an einem separaten hinteren Träger (42, 44) befestigt ist, der mit den hinteren Kopfteil (54) verbunden-ist, und wobei jedes des zweiten Paares von Befestigungselementen (36) an einem gemeinsamen vorderen Träger (40) befestigt ist, der mit dem vorderen Kopfteil (52) verbunden ist.

11. Nachbehandlungstraganordnung (45) nach Anspruch 10, wobei jeder der hinteren Träger (42, 44) einen Auflageteil (60, 62) definiert, der an einem Schwungradgehäuse (70) des Motors befestigt ist.

12. Nachbehandlungstraganordnung (45) nach Anspruch 10, wobei der vordere Träger (40) zur Befestigung an einer vorderen Stirnseite (41) eines Motorblocks (12) eingerichtet ist.
c

## Revendications

1. Ensemble support de système de post-traitement (45), comprenant :
une plaque de montage (30) agencée pour recevoir et supporter un système de post-traitement (10) ;
des première et deuxième paires d'éléments de montage (32, 34, 36, 38) connectées à la plaque de montage (30), chaque élément de la première paire d'éléments de montage (32, 34) étant fixé à un premier support (40), un des éléments de la deuxième paire d'éléments de montage (36, 38) étant fixé à un deuxième support (42), et l'autre élément de la deuxième paire d'éléments de montage (36, 38) étant fixé à un troisième support (44) ;
chaque support supportant au moins l'un des éléments de montage (32, 36), chaque support étant aussi agencé pour être connecté à la plaque de montage (30) ; et
les supports (40, 42, 44) étant agencés et adaptés à être a) espacés d'une tête de cylindre de moteur (8), et b) connectés à un bloc moteur (12).

2. Ensemble support de système de post-traitement (45) selon la revendication 1, dans lequel en outre la plaque de montage (30) est disposée de façon à être placée au-dessus d'un bloc moteur (12).

3. Ensemble support de système de post-traitement (45) selon la revendication 1, dans lequel en outre chacun des supports (40, 42, 44) est adapté à être fixé à un bloc moteur (12) .

4. Ensemble support de système de post-traitement (45) selon la revendication 1, dans lequel la plaque de montage (30) comprend en outre une configuration sensiblement rectangulaire comprenant une paire de rail latéraux sensiblement parallèles (49, 50) et une paire de têtes sensiblement parallèles (52, 54), l'une des têtes comprenant une tête avant (52), l'une des têtes comprenant une tête arrière (54), et les extrémités respectives des rails (49, 50) étant jointes à des extrémités correspondantes des têtes avant et arrière (52, 54).

5. Ensemble support de système de post-traitement (45) selon la revendication 4, dans lequel chaque élément de montage (32, 34, 36, 38) est un élément de montage d'isolation comprenant une douille élastomère d'absorption de vibrations, chacun des éléments de montage d'isolation étant positionné sur l'une des têtes (52, 54).

6. Ensemble support de système de post-traitement (45) selon la revendication 4, dans lequel l'une des têtes (52, 54) comprend une paire de portions en oreilles (56, 58), chaque portion en oreille étant située au niveau d'extrémités opposées de la tête (52, 54).

7. Ensemble support de système de post-traitement (45) selon la revendication 6, dans lequel les portions en oreilles (56, 58) sont positionnées sur la tête arrière (54), et ledit un des éléments de chaque deuxième paire d'éléments de montage (36, 38) est fixé à une portion en oreille (56, 58) de la plaque de montage (30).

8. Ensemble support de système de post-traitement (45) selon la revendication 1, dans lequel la plaque de montage (30) est adaptée à être placée au-dessus d'un bloc moteur (12).

9. Ensemble support de système de post-traitement (45) selon la revendication 1, dans lequel chaque support (40, 42, 44) supporte au moins l'un des éléments de montage (34, 36), chaque support ayant une extrémité adaptée et agencée pour être connectée à la plaque de montage (30).

10. Ensemble support de système de post-traitement (45) selon la revendication 4, dans lequel les première et deuxième paires d'éléments de montage (34, 36) sont positionnées respectivement sur les têtes arrière et avant (52, 54), chaque élément de la première paire d'éléments de montage (34) étant fixé à un support arrière séparé (42, 44) connecté à la tête arrière (54), et chaque élément de la deuxième paire d'éléments de montage (36) étant fixé à un support avant commun (40) connecté à la tête avant (52).

11. Ensemble support de système de post-traitement (45) selon la revendication 10, dans lequel chacun des supports arrière (42, 44) définit une portion de plot (60, 62) adaptée à être fixée à un carter de volant d'inertie de moteur (70).

12. Ensemble support de système de post-traitement (45) selon la revendication 10, dans lequel le support avant (40) est adapté à être fixé sur une face avant (41) d'un bloc moteur (12).
